# EUROPÄISCHE PATENTSCHRIFT

(11) **EP 0 586 780 B1**
(45) Veröffentlichungstag und Bekanntmachung des Hinweises auf die Patenterteilung: **08.11.1995**
(21) Anmeldenummer: 93101163.9
(22) Anmeldetag: 27.01.1993
(51) Int. Cl.: B01D 3/32, B01D 3/16, B01J 19/32

(54) **Flüssigkeitsverteiler für eine Gegenstromkolonne**
Liquid distributor for a counter-current column
Distributeur de liquide pour une colonne à contre-courant

(30) Priorität: 07.08.1992 DE 4226177
(43) Veröffentlichungstag der Anmeldung: 16.03.1994
(73) Patentinhaber: JULIUS MONTZ GmbH, D-40723 Hilden (DE)
(72) Erfinder: Streuber, Hans-Peter, W-5650 Solingen 11 (DE)
(74) Vertreter: COHAUSZ HASE DAWIDOWICZ & PARTNER

(56) Entgegenhaltungen:
- DE-A- 2 752 391
- DE-A- 2 945 103
- DE-A- 3 013 783
- DE-C- 3 409 524

## Beschreibung

Die Erfindung betrifft Flüssigkeitsverteiler für eine Gegenstromkolonne bestehend aus einer Vielzahl U-förmiger, oben offener Rinnen, die in einem Abstand parallel zueinander liegen, und in ihren vertikalen Schenkeln in waagerechter Reihe liegend Öffnungen aufweisen, vor denen sich an der Außenseite der Schenkel und in einem Abstand zu diesen parallele Wände befinden, die nach unten geschlossene Seitenkanäle bilden und an ihrem unteren Ende in eine Vielzahl von Ablaufzungen aufgeteilt sind, wobei die Wand jeden Seitenkanals und in ihrem oberen Abschnitt Endverteileröffnungen oder -schlitze aufweist, von denen die Flüssigkeit zu den Zungen fließt.

Verteiler dieser Art sind aus DE-A-2752391 und DE-A-3409524 bekannt. Danach werden Öffnungen in den vertikalen Schenkeln U-förmiger Rinnen durch davor liegende Wände abgeschirmt. Gemäß DE-A-2752391 wird die durch die Öffnungen austretende Flüssigkeit je nach Menge und Austrittsgeschwindigkeit auf den Wänden mehr oder weniger ausgebreitet. Eine gleichmäßige Verteilung über die gesamte Rinnenlänge läßt sich vor allen bei wechselnder Flüssigkeitsbeaufschlagung des Bodens nicht erreichen. Gemäß DE-PS 3409524 wird der Raum zwischen den Schenkeln der U-Rinnen und den davorliegenden Wänden unterhalb der Öffnungen in den Schenkeln verschlossen. Die Beaufschlagung der Ablaufzungen erfolgt über Schlitze am oberen Rand der Wände. Bei einer Abweichung des Bodens aus der Waagerechten tritt vor allem bei geringer Flüssigkeitsbeaufschlagung eine Fehlverteilung auf.

Aufgabe der Erfindung ist es, einen Verteiler der eingangs genannten Art in bezug auf die Genauigkeit der Verteilung bei günstigen Herstellungskosten zu verbessern.

Gemäß der Erfindung wird die Aufgabe dadurch gelöst, daß die Seitenkanäle quer unterteilt sind in mehrere kurze Räume, die jeweils mindestens durch eine Öffnung mit der Rinne verbunden sind und mindestens eine Endverteileröffnung oder -schlitze aufweisen.

Durch die Aufteilung der gesamten Ablaufstellen einer Rinne in eine Vielzahl von Einzelabschnitten wird eine hohe Verteilgenauigkeit erreicht. Abweichungen in der horizontalen Lage des Verteilers infolge fehlerhafter Montage oder ungenauer Fertigung fallen nicht mehr so sehr ins Gewicht. Dies wirkt sich besonders bei Verteilern mit geringer Flüssigkeitsbelastung aus.

Vorteilhafte Ausgestaltungen der Erfindung sind in den Unteransprüchen aufgeführt. Eine besonders gleichmäßige Flüssigkeitsverteilung wird erreicht, wenn auf der Innenseite der die vertikalen Schenkel bildenden Rinnenwände im Bereich der Öffnungen die die Rinne mit dem Seitenkanal verbinden, Vorkammern angeordnet sind, in die die Rinnenflüssigkeit gelangt, ehe sie in den Seitenkanal fließt. Dies ist besonders vorteilhaft bei hoher Flüssigkeitsbelastung.

Die Zeichnungen zeigen zwei Ausführungsbeispiele der Erfindung.

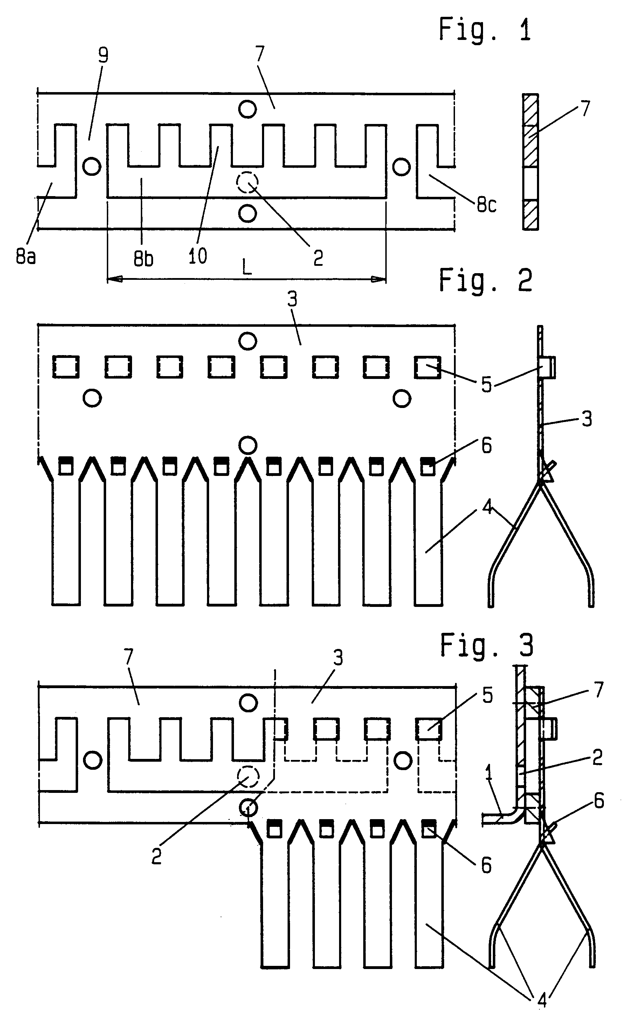

- Figur 1: zeigt eine Distanzleiste, eines ersten Ausführungsbeispiels,
- Figur 2: zeigt eine Wand mit Ablaufzungen und Endverteileröffnung,
- Figur 3: zeigt eine Distanzleiste mit Wand an einer Seite einer U-förmigen Verteilerrinne angeschraubt,

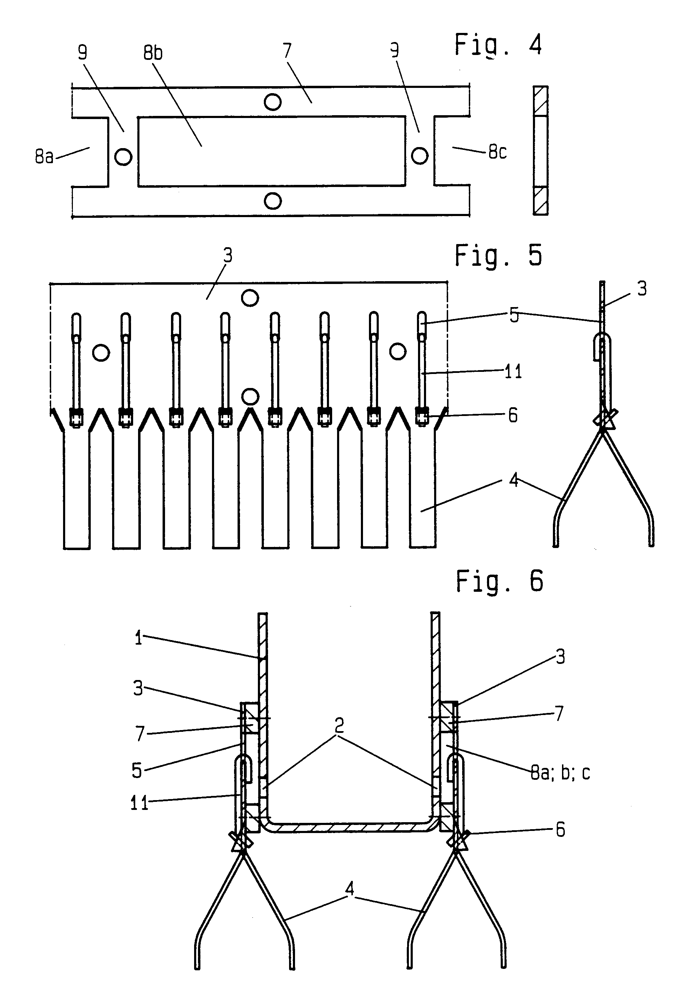

- Figur 4: zeigt eine Distanzleiste ohne Gasse,
- Figur 5: zeigt eine Wand mit eingehängten Kapillarklammern,
- Figur 6: zeigt eine U-förmige Verteilerrinne mit angeschraubten Distanzleisten und Wänden mit Kapillarklammer.
- Figur 7: zeigt bei einem zweiten Ausführungsbeispiel im Schnitt den vertikalen Schenkel einer Verteilerrinne mi daran befestigten Verteilerelementen.
- Figur 8: zeigt die Draufsicht der Vorkammer an der Innenseite der U-förmigen Verteilerrinne mit einer drehbaren Blende am Abschlußbereich.

Der Verteiler gemäß der Erfindung besteht aus einer Vielzahl von U-förmigen Rinnen 1 in deren vertikalen Schenkeln eine Anzahl von Öffnungen 2 sich befinden. Über die gesamte Länge der Rinne 1 liegen vor diesen Öffnungen 2 und in einem gewissen Abstand zu diesen Wände 3, die an ihrem unteren Ende mit Ablaufzungen 4 und oberhalb mit Endverteileröffnungen oder -schlitze 5 versehen sind. Herausgestellte Lappen 6 bewirken eine beiderseitige Beaufschlagung der Ablaufzungen. Der Abstand der Wände 3 zu den vertikalen Schenkeln der Rinnen 1 wird durch Distanzleisten 7 hergestellt, die so ausgebildet sind, daß sich vor den Öffnungen geschlossene Räume 8a,8b,8c bilden, die durch Stege 9 gegen die benachbarten Öffnungen in der Rinne abgegrenzt sind. Die Räume 8a,8b,8c sind in einzelne Gassen 10 aufgeteilt, die zu den Endverteileröffnungen 5 führen. Vor den Räumen 8a,8b,8c, die vorzugsweise die gleiche Größe aufweisen, liegen in gleichmäßigen Abständen eine Mehrzahl von Ablaufzungen 4, die in wechselnde Richtungen so abgebogen sind, daß sich über den Kolonnenquerschnitt eine gleichmäßige Beaufschlagung ergibt. Bei sehr geringen Flüssigkeitsmengen empfiehlt es sich, die Endverteileröffnungen 5 als Schlitze auszubilden und in bekannter Weise mit Kapillarklammern 11 zu versehen.

Die Größe der Öffnungen 2 und die Stauhöhe in der Rinne 1 richtet sich nach der zu verteilenden Flüssigkeitsmenge und dem gewünschten Belastungsbereich. Der Flüssigkeitsstand in der Rinne 1 ist so zu bemessen, daß der bei Minimallast noch über der Oberkante der Räume 8a,8b,8c liegt. Der Abfluß der Flüssigkeit durch die Endverteileröffnungen 5 erfolgt ohne Staudruck. Die Gassen 10 sorgen für eine beruhigte und geordnete Zuführung der Flüssigkeit zu den Endverteileröffnungen 5.

Die Räume 8a,8b,8c sollten innerhalb eines Verteilers nach Möglichkeit gleich groß sein. Es besteht auch die Möglichkeit, die Größe der Öffnungen 2 auf die Anzahl der zu versorgenden Ablaufzungen abzustimmen. Die Länge L der vorzugsweise nach oben geschlossenen Räume beträgt 100 bis 300 mm, vorzugsweise 130 bis 170 mm.

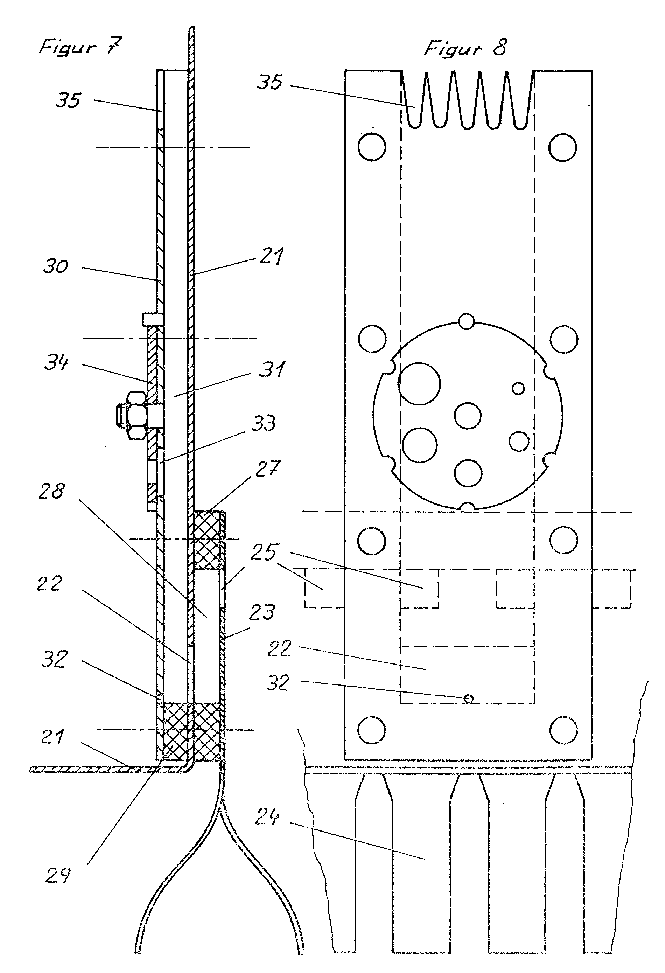

Ein zweites Ausführungsbeispiel ist in der Figur 7 und 8 gezeigt. An den U-förmigen Rinnen 21 befinden sich in den vertikalen Schenkeln Öffnungen 22. Vor diesen liegen Wände 23, die an ihrem unteren Ende mit Ablaufzungen 24 und oberhalb mit Endverteileröffnungen 25 versehen sind. Der Abstand der Wände 23 zu den vertikalen Schenkeln der Verteilerrinne 21 wird duch Distanzleisten 27 hergestellt, die so ausgebildet sind, daß sich vor den Öffnungen 22 geschlossene Räume 28 bilden, in deren Bereich sich eine Anzahl von Endverteileröffnungen 25 mit den dazugehörigen Ablaufzungen 24 befinden. An der Innenseite der Verteilerrinne 21 wird duch U-förmig angeordnete Distanzleisten 29 und Abschlußbleche 30 zu jedem geschlossenen Raum 28 eine nach oben offene Vorkammer 31 gebildet. In dem Abschlußblech 30 sind Bohrungen 32/33 angebracht, die wahlweise durch Blenden 34 im Durchmesser verändert werden können. Das obere Ende des Abschlußbleches 30 ist mit Schlitzen 35 versehen.

Die Anbringung der Vorkammer 31 macht es möglich, die Öffnungen 22 in den Schenkeln der Rinnen 21 sehr groß zu halten. Die Eintrittsgeschwindigkeit der Flüssigkeit in die Räume 28 wird somit reduziert und der Flüssigkeitsstand vor den Endaustrittsöffnungen 25 nicht so sehr vom Staudruck beeinflußt.

Durch das Anbringen von mehreren Bohrungen in unterschiedlicher Höhenlage im Abschlußblech 30 ist es möglich, den Verteiler mehrstufig zu betreiben und damit den Belastungsbereich zu vergrößern.

Die untere Bohrung 32 ist auf den Durchsatz der minimalen Flüssigkeitsmenge abgestimmt und dient gleichzeitig als Leerlaufbohrung.

Da die Bohrung 33 ohne großen Aufwand mit der Blende 34 verändert werden kann, ist der Verteiler unterhalb einer max. Belastungsgrenze universell einsetzbar.

Alle Teile können maschinell einfach und mit größter Genauigkeit hergestellt werden. Sie sind leicht und schnell zu montieren, die Öffnungen gut zugänglich und Einzelteile leicht auswechselbar.

## Patentansprüche

1. Flüssigkeitsverteiler für eine Gegenstromkolonne bestehend aus einer Vielzahl U-förmiger, oben offener Rinnen (1, 21), die in einem Abstand parallel zueinander liegen, und in ihren vertikalen Schenkein in waagerechter Reihe liegend Öffnungen (2, 22) aufweisen, vor denen sich an der Außenseite der Schenkel und in einem Abstand zu diesen parallele Wände (3, 23) befinden, die nach unten geschlossene Seitenkanäle (8,28) bilden und an ihrem unteren Ende in eine Vielzahl von Ablaufzungen (4, 24) aufgeteilt sind, wobei die Wand (3, 23) jeden Seitenkanals in ihrem oberen Abschnitt Endverteileröffnungen oder -schlitze (5, 25) aufweist, von denen die Flüssigkeit zu den Zungen fließt, **dadurch gekennzeichnet,** daß die Seitenkanäle (8, 28) quer unterteilt sind in mehrere kurze Räume (8a, 8b, 8c), die jeweils mindestens durch eine Öffnung (2, 22) mit der Rinne (1, 21) verbunden sind und mindestens eine Endverteileröffnung oder -schlitze aufweisen.

2. Flüssigkeitsverteiler nach Anspruch 1, **dadurch gekennzeichnet,** daß der Abstand der Wände (3) zu den vertikalen Schenkein der Rinnen (1) durch Distanzleisten (7) hergestellt ist, die vor jeder Öffnung (2) der vertikalen Schenkel ein zu den benachbarten Öffnungen (2) abgeschlossenen Raum (8) bilden, in dessen Bereich zwei oder mehr Ablaufzungen (4) und Endverteileröffnungen (5) der Wände (3) liegen.

3. Flüssigkeitsverteiler nach Anspruch 1 oder 2, **dadurch gekennzeichnet,** daß innerhalb des Raumes (8a, 8b, 8c) Gassen (10) gebildet sind, die zu den Endverteileröffnungen (5) der Wand (3) führen.

4. Flüssigkeitsverteiler nach Anspruch 1, **dadurch gekennzeichnet,** daß die Distanzleisten (7) aus einem Material hergestellt sind, das gleichzeitig als Dichtung dient.

5. Flüssigkeitsverteiler nach einem der vorhergehenden Ansprüche, **dadurch gekennzeichnet,** daß die Räume (8a, 8b, 8c) nach oben geschlossen sind.

6. Flüssigkeitsverteiler nach einem der vorherigen Ansprüche, **dadurch gekennzeichnet,** daß auf der Innenseite der die vertikalen Schenkel bildenden Rinnenwände im Bereich der Öffnungen (22), die die Rinne (1) mit dem Seitenkanal (28) verbinden, Vorkammern (31) angeordnet sind, in die die Rinnenflüssigkeit gelangt, ehe sie in den Seitenkanal (28) fließt.

7. Flüssigkeitsverteiler nach Anspruch 6, **dadurch gekennzeichnet,** daß zum Bilden der Vorkammern (31) auf der Innenseite der Rinnenwand Distanzleisten (29) und senkrechte Abschlußbleche (30) befestigt sind.

8. Flüssigkeitsverteiler nach Anspruch 7, **dadurch gekennzeichnet,** daß die senkrechte Abschlußblech (30) der Vorkammer (31) mindestens eine Durchlaßöffnung (33) aufweist, die das Rinneninnere mit der Vorkammer (31) verbindet.

9. Flüssigkeitsverteiler nach Anspruch 8, **dadurch gekennzeichnet,** daß die Durchlaßöffnung (33) in ihrer Größe veränderbar ist.

10. Flüssigkeitsverteiler nach einem der Ansprüche 7 bis 9, **dadurch gekennzeichnet,** daß zusätzlich oder alternativ eine Durchlaßöffnung (32) im unteren Bereich des Abschlußbleches (30) angeordnet ist.

11. Flüssigkeitsverteiler nach einem der Ansprüche 6 bis 10, **dadurch gekennzeichnet,** daß das Abschlußblech (30) eine Höhe hat, die kurz unterhalb der vertikalen Schenkel der Verteilerrinne endet.

12. Flüssigkeitsverteiler nach Anspruch 10 oder 11, **dadurch gekennzeichnet,** daß das Abschlußblech (30) mit mehreren Durchlaßöffnungen (32, 33) in unterschiedlicher Höhenlage versehen ist.

13. Flüssigkeitsverteiler nach einem der Ansprüche 10 bis 12, **dadurch gekennzeichnet,** daß zumindest eine der Durchlaßöffnungen (32, 33) durch eine Blende (34) wahlweise mit einer Bohrung kleineren Durchmessers überdeckbar ist.

14. Flüssigkeitsverteiler nach Anspruch 13, **dadurch gekennzeichnet,** daß sich die kleineren Bohrungen auf dem Radius einer drehbaren Scheibe (34) befinden.

15. Flüssigkeitsverteiler nach einem der Ansprüche 6 bis 15, **dadurch gekennzeichnet,** daß das Abschlußblech an seinem oberen Ende mit Einlauföffnungen insbesondere Schlitzen (35) versehen ist.

16. Flüssigkeitsverteiler nach einem der Ansprüche 1 bis 15, **dadurch gekennzeichnet,** daß die Durchlaßöffnung (2, 22) in den vertikalen Schenkeln der U-förmigen Rinne (1) durch eine Lochblende in ihrer Größe veränderbar ist.

## Claims

1. A liquid distributor for a countercurrent column, comprising a plurality of U-shaped channels (1, 21) which are open at the top and are disposed spaced-out parallel with one another and whose vertical arms are formed with openings (2, 22) which lie in a horizontal series and in front of which, on the outside of the arms and at a distance therefrom, parallel walls (3, 23) are disposed which form downwardly closed lateral ducts (8, 28) and whose bottom end is subdivided into a plurality of discharge tongues (4, 24) the upper portion of the wall (3, 23) of each lateral duct being formed with final distributing openings or slots (5, 25) from which the liquid flows to the tongues, characterized in that the lateral ducts (8, 28) are transversely subdivided into a number of short spaces (8a, 8b, 8c) each connected via at least one opening (2, 22) to the channel (1, 21) and have at least one final distributing opening or slot.

2. A liquid distributor according to claim 1, characterized in that the distance of the walls (3) from the vertical arms of the channels (1) is produced by spacer strips (7) which form in front of each opening (2) of the vertical arms a space (8) which is closed in the direction of the adjacent openings (2) and in whose zone two or more discharge tongues (4) and final distributing openings (5) of the walls (3) are disposed.

3. A liquid distributor according to claims 1 or 2, characterized in that formed inside the space (8a, 8b, 8c) are lanes (10) leading to the final distributing openings (5) of the wall (3).

4. A liquid distributor according to claim 1, characterized in that the spacer strips (7) are made from a material which also acts as a seal.

5. A liquid distributor according to one of the preceding claims, characterized in that the spaces (8a, 8b, 8c) are closed in the upward direction.

6. A liquid distributor according to one of the preceding claims, characterized in that disposed on the inside of the channel walls forming the vertical arms, in the zone of the openings (22) connecting the channel (1) to the lateral duct (28), are antichambers (31) into which the liquid from the channel passes before it flows into the lateral duct (28).

7. A liquid distributor according to claim 6, characterized in that spacer strips (29) and vertical closure plates (30) are attached to the inside of the channel wall to form the antichambers (31).

8. A liquid distributor according to claim 7, characterized in that the vertical closure plate (30) of the antichamber (31) is formed with at least one passage opening (33) connecting the interior of the channel to the antichamber (31).

9. A liquid distributor according to claim 8, characterized in that the size of the passage opening (33) can be altered.

10. A liquid distributor according to one of claims 7 to 9, characterized in that additionally or alternatively a passage opening (32) is disposed in the bottom zone of the closure plate (30).

11. A liquid distributor according to one of claims 6 to 10, characterized in that the closure plate (30) has a height which terminates shortly below the vertical arms of the distributing channel.

12. A liquid distributor according to claims 10 or 11, characterized in that the closure plate (30) is formed with a number of passage openings (32, 33) at different positions in height.

13. A liquid distributor according to one of claims 10 to 12, characterized in that at least one of the passage openings (32, 33) can be covered by a baffle (34) optionally with a bore of smaller diameter.

14. A liquid distributor according to claim 13, characterized in that the smaller bores are disposed on the radius of a rotatable disc (34).

15. A liquid distributor according to one of claims 6 to 15, characterized in that the top end of the closure plate is formed with inlet openings, more particularly slots (35).

16. A liquid distributor according to one of claims 1 to 15, characterized in that the size of the passage opening (2, 22) in the vertical arms of the U-shaped channel (1) can be altered by a perforate baffle.

## Revendications

1. Distributeur de fluide pour une colonne à contre-courant constituée d'une pluralité de conduits (1, 21) en forme de U ouverts en haut, qui se trouvent parallèles à écartement les uns des autres et présentent, dans leurs branches verticales, des ouvertures (2, 22) disposées en rangée horizontale devant lesquelles et à distance de celles-ci sur le côté extérieur des branches se trouvent des parois (3, 23) parallèles qui forment des canaux latéraux (8, 28) fermés vers le bas et sont divisées à leur extrémité inférieure en une pluralité de languettes d'écoulement (4, 24), la paroi (3, 23) de chaque canal latéral présentant dans sa section supérieure des ouvertures ou des fentes de distribution d'extrémité (5, 25) desquelles le fluide s'écoule jusqu'aux languettes, caractérisé en ce que les canaux latéraux (8, 28) sont divisés obliquement en plusieurs volumes courts (8a, 8b, 8c) qui sont reliés respectivement, au moins par une ouverture (2, 22), au conduit (1, 21) et présentent au moins une ouverture ou une fente de distribution d'extrémité.

2. Distributeur de fluide selon la revendication 1, caractérisé en ce que la distance des parois (3) aux branches verticales des conduits (1) est réalisée par des nervures d'écartement (7) qui forment, devant chaque ouverture (2) des branches verticales, un volume (8) séparé des ouvertures (2) adjacentes, dans la zone duquel se trouvent deux languettes d'écoulement (4) et ouvertures de distribution d'extrémité (5) des parois (3) ou plus.

3. Distributeur de fluide selon la revendication 1 ou 2, caractérisé en ce que des voies (10), qui conduisent aux ouvertures de distribution d'extrémité (5) de la paroi (3), sont formées à l'intérieur du volume (8a, 8b, 8c).

4. Distributeur de fluide selon la revendication 1, caractérisé en ce que les nervures d'écartement (7) sont fabriquées en un matériau qui sert en même temps de matériau d'étanchéité.

5. Distributeur de fluide selon l'une des revendications précédentes,
caractérisé en ce que les volumes (8a, 8b, 8c) sont fermés vers le haut.

6. Distributeur de fluide selon l'une des revendications précédentes,
caractérisé en ce que, sur la face intérieure des parois de conduit formant les branches verticales, dans la zone des ouvertures (22) qui relient le conduit (1) au canal latéral (28), sont disposées des pré-chambres (31) dans lesquelles arrive le fluide du conduit avant qu'il s'écoule dans le canal latéral (28).

7. Distributeur de fluide selon la revendication 6, caractérisé en ce que, pour la formation des pré-chambres (31), des nervures d'écartement (29) et des tôles de fermeture (30) verticales sont fixées sur la face intérieure de la paroi de conduit.

8. Distributeur de fluide selon la revendication 7, caractérisé en ce que la tôle de fermeture (30) verticale de la pré-chambre (31) présente au moins une ouverture de passage (33) qui relie l'intérieur du conduit à là pré-chambre (31).

9. Distributeur de fluide selon la revendication 8, caractérisé en ce que l'ouverture de passage (33) est de grandeur qui peut être modifiée.

10. Distributeur de fluide selon l'une des revendications précédentes, caractérisé en ce que, en supplément ou en variante, une ouverture de passage (32) est disposée dans la zone inférieure de la tôle de fermeture (30).

11. Distributeur de fluide selon l'une des revendications 7 à 10,
caractérisé en ce que la tôle de fermeture (30) a une hauteur qui se termine peu au-dessous de la branche verticale du conduit du distributeur.

12. Distributeur de fluide selon la revendication 10 ou 11, caractérisé en ce que la tôle de fermeture (30) est munie de plusieurs ouvertures de passage (32, 33) à des positions en hauteur différentes.

13. Distributeur de fluide selon l'une des revendications 10 à 12,
caractérisé en ce qu'au moins une des ouvertures de passage (32, 33) peut être recouverte, au choix avec un alésage de plus petit diamètre, par un obturateur (34).

14. Distributeur de fluide selon la revendication 13, caractérisé en ce que les alésages plus petits se trouvent sur le rayon d'un disque pivotant (34).

15. Distributeur de fluide selon l'une des revendications 6 à 14,
caractérisé en ce que la tôle de fermeture est munie à son extrémité supérieure d'ouvertures d'entrée, en particulier de fentes (35).

16. Distributeur de fluide selon l'une des revendications 1 à 15,
caractérisé en ce que l'ouverture de passage (2, 22) dans les branches verticales du conduit (1) en forme de U peut être modifiée en grandeur par un obturateur à trou.
